# EUROPEAN PATENT APPLICATION

(11) **EP 0 663 281 A2**
(43) Date of publication of application: **19.07.1995**
(21) Application number: 95100121.3
(22) Date of filing: 05.01.1995
(51) Int. Cl.: B29C 69/00, B29D 31/00

(54) **Method of manufacturing a textile covered plastic part**

(30) Priority: 18.01.1994 DE 4401266
(71) Applicant: BRANSON ULTRASCHALL Niederlassung der EMERSON TECHNOLOGIES GmbH & CO., D-63128 Dietzenbach (DE)
(72) Inventor: Bacher, Jochen, D-63128 Dietzenbach (DE)
(74) Representative: Dipl.-Ing. H. Hauck, Dipl.-Ing. E. Graalfs, Dipl.-Ing. W. Wehnert, Dr.-Ing. W. Döring, Dr.-Ing. N. Siemons

(57) **Abstract**

A textile covered plastic part, such as an interior trim panel for automobiles, is made by providing a preformed or molded plastic part (2) and a laminate comprising a textile covering (4), the underside of which is provided with a layer of thermoplastic material (8). The laminate then is shaped by thermoforming to correspond to the shape of the preformed plastic part. Subsequently, the plastic part and the laminate are bonded to one another by vibration (friction) welding. Weld projections (10) may be provided on the thermoplastic layer of the laminate and on the plastic part to facilitate welding, avoiding the presence of visible marks at the surface of the textile covering.

## Description

### SUMMARY OF THE INVENTION.

This invention concerns a method of manufacturing a molded part comprising a preformed plastic part provided with a textile covering.

Molded parts of this type are used, for instance, as interior trim panels in automobiles. The plastic part, typically, is made by injection molding, pressure or extrusion molding, or blow molding, while the textile covering, for example, may comprise carpet or fabric material with or without foam rubber backing.

It is known to attach a layer of textile material to a preformed plastic part using adhesives. However, this type of bond has the disadvantages inherent in the use of adhesives.

The purpose of the present invention is the provision of a method of manufacturing a molded part comprising a plastic part and a textile covered laminate in which the molded plastic part and the textile covered laminate are bonded to one another in a relatively simple and effective manner.

In accordance with the method disclosed hereafter, the textile covered laminate is deformed by molding to impart to it a shape corresponding to that of the plastic part. Most suitably, a die is applied to the underside of the textile covered laminate to deform the laminate to the predetermined shape. During this process weld projections can be formed which then assist in bonding together by vibration welding the plastic part and the textile covered laminate.

This invention, therefore, provides the possibility of bonding large textile laminates (textile panels) to preformed or molded plastic parts. A particular advantage resides in the feature that by using vibration welding and a suitable pattern of weld projections, the parts are joined without leaving visible marks at the exposed side of the textile covering.

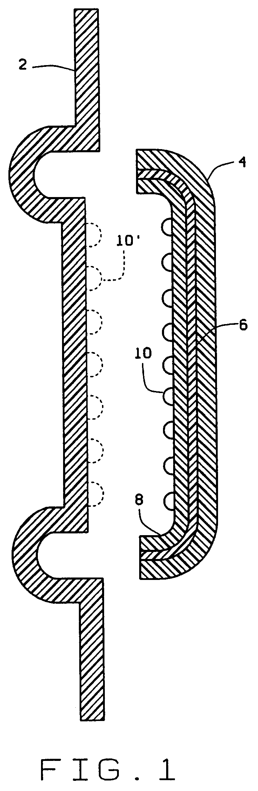

Other advantages and features of this invention will become more clearly apparent from the following description when considered in conjunction with the accompanying drawing.

### BRIEF DESCRIPTION OF THE DRAWING.

The single figure is an elevational, cross-sectional view of a typically molded panel, showing the molded plastic part and the textile covered laminate prior to bonding both parts to one another.

### DETAILED DESCRIPTION.

Referring now to the figure, a plastic part 2 is produced in predetermined shape using injection molding, die molding, drawing, extrusion or blow molding, or a similar process. As understood herein, the part 2 may be made from thermoplastic material, molded wood fiber material, or other suitable material, the only requirement being that the plastic part 2 and the textile covered laminate when assembled for bonding form a chemical or mechanical bond with one another responsive to being subjected to mechanical vibrations in a vibration or friction welding apparatus.

The textile cover material 4 is manufactured, for example, in sheet form on a weaving or knitting loom and may comprise carpet or cloth material. The layer of textile material 4 is provided at its underside with a layer 8 of thermoplastic material. In the example illustrated, a foam rubber backing layer 6 is interposed between the textile material 4 and the thermoplastic layer 8. The layer 8, for example, is provided as a part of the extrusion process by rollers, or as a part of a pressure molding process. The thickness of the layer is selected so that the assembly of layers forming the laminate remains flexible, that is, not self-supporting.

The lamination process is followed by a thermoforming stage such as a deep drawing stage which may require one or more individual stages for causing the textile covered laminate 4, 6 and 8 to attain the shape corresponding to that of the plastic part 2. Moreover, during thermoforming a suitably selected contoured pattern is provided at the underside of the laminate. This pattern is made most suitably by a respective die which includes a recessed pattern of ridges, knurls, ribs, etc. to cause upstanding weld projections 10 of corresponding shape. Most suitably, during the thermoforming process, the textile covered laminate is cut or trimmed to cause it to attain its desired outline.

The plastic part 2 and the correspondingly shaped laminate 4, 6 and 8 are bonded to one another by vibration (friction) welding. For vibration welding, the textile coverd laminate comprising layers 4, 6 and 8 is placed upon the the plastic part 2 and by means of vibrations in a plane parallel to the superposed surfaces, the layer 8 of thermoplastic material is bonded to the plastic part 2 responsive to frictional heat.

Instead of, or in addition to, the weld projections 10 protruding from the thermoplastic layer 8, if desired, such projections can be provided also on the plastic part 2, indicated by dashed lines 10'. As a result of such weld projections, the bond between the plastic part 2 and the textile covered laminate 4, 6 and 8 is achieved without the presence of bonding traces along the surface of the textile covering 4. Moreover, the use of weld projections provides the possibility to equalize any dimensional variations across the surface of the joined parts.

A machine suitable for vibration welding the respective parts to one another is shown in U.S. Patent No. 3,920,504 issued to A. Shoh et al, dated November 18, 1975, entitled "Friction Welding Apparatus". When using tufted carpet material for the covering, the tool engaging the carpet material can be of the type shown in U.S. Patent No. 5,026,445 issued to S. J. Mainolfi et al, dated June 25, 1991, entitled "Method and Apparatus for Producing Carpeted Panels". For other textile materials, a tool having pyramid shaped projections, each two or three millimeter high, may be appropriate. For textile covering material having a relatively smooth surface, the tool can comprise a metal plate provided with a molded rubber surface exhibiting a rough texture for gripping the covering.

### EXAMPLES.

The following describes several typical examples of textile covered plastic parts using the process described above.
- Example #1:: Map pocket with woven textile material welded to injection molded polypropylene part.
- Dimension:: 480 mm by 130 mm molded surface.
- Laminate:: Woven textile covering with 2 mm thick polyurethane foam middle layer and 0.8 mm thick polypropylene backing.
- Manufacturing:: The textile material with attached foam backing is attached to the polypropylene layer by an extrusion and calandaring process which results in roll stock material 1.5 m wide. This material then is thermoformed and die cut to shape. During the thermoforming process weld projections 6 mm diameter by 0.2 to 0.3 mm high are formed in the backing material for enhancing the welding process. Vibration welding is used to attach the textile covered laminate to the molded part. A polymer (chemical) bond is formed between the laminate and the molded part (substrate).

- Example #2:: Door panel polypropylene with bonded polypropylene carpet material.
- Dimension:: Door panel 700 mm by 400 mm. Insert 600 mm by 240 mm with contoured surface.
- Laminate:: Needled polypropylene carpet fibers with 0.5 mm thick polypropylene extruded carpet backing.
- Manufacturing:: The carpet fibers are needled in sheet form and 0.5 mm thick polypropylene material is extruded on back of the carpet. The roll is fed into a four-cavity thermoform and die cut press. The die cut laminate is assembled with the molded propylene door part and by vibration welding the polypropylene backed laminate is bonded to the polypropylene molded door panel. A polymer (chemical) bond is formed.

- Example #3:: Door panel acrylonitrile, butadiene and styrene (ABS) with mechanically attached carpet using vibration welding.
- Dimension:: Door panel 750 mm by 530 mm. Carpet 520 mm by 220 mm.
- Laminate:: Needled polypropylene carpet fiber cover material, 0.5 mm thick polyethylene with 5 oz per sq. yd. felt embedded at rear side polyethylene layer.
- Manufacturing:: The polypropylene carpet fibers are needled in sheet form and a 0.5 mm thick polyethylene layer is extruded for backing the needled carpet fibers. Then, a 5 oz. per square yard felt is embedded into the rear side of the polyethylene backing material. The rolled laminate is fed into a four-cavity thermoform and die cut press. The carpet is then placed upon the surface of the ABS door panel base and using a vibration welding apparatus the laminate is bonded to the door panel. The bond achieved is a mechanical locking of the felt into the ABS door panel substrate.

While there has been described and illustrated a preferred embodiment of the invention and additional specific embodiments have been described, it will be apparent to those skilled in the art that various changes and modifications can be made without departing from the broad principle of the invention, which shall be limited only by the scope of the appended claims.

## Claims

1. The method of manufacturing a textile covered plastic part comprising:
providing a plastic part of predetermined shape;
providing a layer of textile material and applying to its underside a layer of thermoplastic material to thereby cause a laminate;
deforming said textile covered laminate by thermoforming to cause it to assume a shape corresponding to that of said plastic part, and
bonding said plastic part and said textile covered laminate to one another by vibration welding.

2. The method of manufacturing a textile covered plastic part as set forth in claim 1, and providing during thermoforming the underside of said laminate with a predetermined pattern.

3. The method of manufacturing a textile covered plastic part as set forth in claim 2, said pattern comprising projections protruding from said layer of thermoplastic material.

4. The method of manufacturing a textile covered plastic part as set forth in claim 1, and cutting said laminate during thermoforming to cause it to attain the desired outline.

5. The method of manufacturing a textile covered plastic part as set forth in claim 1, said layer of thermoplastic material being applied to said layer of textile material during an extrusion process over rollers or during molding.

6. The method of manufacturing a textile covered plastic part as set forth in claim 1, and providing the underside of said layer of textile material with a layer of foam rubber prior to applying said layer of thermoplastic material.

7. The method of manufacturing a textile covered plastic part as set forth in claim 1, said plastic part being produced by injection molding, drawing, extrusion or blow molding.

8. The method of manufacturing a textile covered plastic part as set forth in claim 1, and providing said plastic part with a pattern of weld projections.
